# EUROPEAN PATENT SPECIFICATION

(11) **EP 3 020 754 B1**
(45) Date of publication and mention of the grant of the patent: **27.05.2026**
(21) Application number: 14822451.2
(22) Date of filing: 09.07.2014
(51) Int. Cl.: B32B 27/08, B32B 27/28, B32B 27/38, B32B 7/06, B01D 67/00, B01D 69/06, B01D 69/10, B01D 71/60, B29D 99/00, C08J 5/18, B32B 38/10, B01D 71/46

(54) **COMPOSITE LAYER MATERIAL, METHOD FOR MANUFACTURING MEMBRANE, AND METHOD FOR MANUFACTURING LAYERED BODY**
VERBUNDSCHICHTMATERIAL, VERFAHREN ZUR HERSTELLUNG EINER MEMBRAN UND VERFAHREN ZUR HERSTELLUNG EINES SCHICHTKÖRPERS
MATÉRIAU STRATIFIÉ COMPOSITE, PROCÉDÉ DE FABRICATION D'UNE MEMBRANE ET PROCÉDÉ DE FABRICATION D'UN CORPS STRATIFIÉ

(30) Priority: 10.07.2013 JP 2013144852; 10.07.2013 JP 2013144848; 04.07.2014 JP 2014139142; 04.07.2014 JP 2014139143
(43) Date of publication of application: 18.05.2016
(73) Proprietor: Tokyo Ohka Kogyo Co., Ltd., Kawasaki-shi, Kanagawa 211-0012 (JP)
(72) Inventor: OGATA, Toshiyuki, Kawasaki-shi Kanagawa 211-0012 (JP); NOGUCHI, Takuya, Kawasaki-shi Kanagawa 211-0012 (JP); FUJIMURA, Satoshi, Kawasaki-shi Kanagawa 211-0012 (JP); FUJIKAWA, Shigenori, Fukuoka-shi Fukuoka 813-0017 (JP)
(74) Representative: Plasseraud IP
(86) International application number: PCT/JP2014/068303
(87) International publication number: WO 2015/005382

(56) References cited:
- WO-A1-2006/082762
- JP-A- 2005 246 960
- JP-A- 2005 246 960
- JP-A- 2009 190 328
- JP-A- 2009 241 613
- JP-A- 2009 241 613
- JP-A- 2012 144 040
- JP-A- 2013 000 897
- JP-A- 2013 000 897
- DATABASE WPI Week 201332, Derwent World Patents Index; AN 2013-G97114

## Description

### Technical Field

The present invention relates to a composite layer material in which at least three layers are laminated. Moreover, the present invention relates to a method for manufacturing a membrane and a method for manufacturing a layered body.

### Background Art

In recent years, attention has been given to a self-supporting thin film which has a large surface area and a thickness in a nano order because such a self-supporting thin film can be used as a permselective membrane, a microsensor, a drug delivery film, or the like. Under the circumstances, various methods for manufacturing the self-supporting thin film have been studied, and a water surface casting method, an interface reaction method using a silane coupling agent, and the like are known. However, in general, thin films obtained by these methods lack mechanical strength, and accuracy of obtained thin films is limited.

Meanwhile, although a biological lipid thin film is significantly high in accuracy in forming the film due to self-organization capability of molecules themselves, the biological lipid thin film does not have enough mechanical strength for use as a functional thin film. Therefore, the biological lipid thin film needs to have a multiple layer structure, and is not excellent in general practicality.

Moreover, a Langmuir Blodgett (LB) method and a layer-by-layer (LbL) method which are known as a thin film forming method include complicated fabrication operation, and often produce an aggregation of microcrystalline domains including many defects. Therefore, these methods are not so practical. That is, it is difficult to obtain, with these methods, a membrane which has a large surface area and high strength.

Patent Literature 1 discloses (i) a polymer thin film which concurrently has a thickness of 100 nm or less and a self-supporting property and (ii) a method for manufacturing the polymer thin film. More specifically, a sacrificial layer is provided on a surface of a support; chain polymerization of a polymerizable compound in a composition is carried out on a surface of the sacrificial layer; and then the sacrificial layer is removed so that the support and the composition thus polymerized are separated from each other, and thus a polymer thin film is manufactured.

Moreover, it is difficult to directly manufacture a self-supporting thin film, and therefore a method has been studied in which a thin film is manufactured on a surface of an object with a transfer method. For example, Patent Literature 2 discloses a thin film transferring material which includes a temporal support and a fine particle layered membrane that is formed on at least one surface of the temporal support. Further, Patent Literature 2 discloses (i) a method in which the fine particle layered membrane of the thin film transferring material is transferred onto a surface of a molded article so that the fine particle layered membrane is embedded in the surface of the molded article and thus the molded article covered with the thin film is manufactured and (ii) that, after the fine particle layered membrane is embedded in the surface of the molded article, a temporal supporting membrane is stripped off from the molded article covered with the thin film.

Moreover, in view of broadening a range of monomers that can be used as a structural unit of a polymer thin film, a method has been studied in which a curable polymer thin film is obtained with use of a composition that is hardened by chain polymerization. For example, Patent Literature 3 discloses a curable polymer thin film that is obtained by hardening a composition that contains a multifunctional vinyl aromatic copolymer (A) by chain polymerization, in particular, by radical polymerization.

Further, a method has been studied for manufacturing a polymer thin film that has a large surface area and high strength. For example, Patent Literature 4 discloses a self-supporting polymer thin film which is made of a block copolymer that is obtained by covalent bond of hydrophilic polymer components and hydrophobic polymer components having a cross-linkable structure. The self-supporting polymer thin film has a cylinder that is made up of the hydrophilic polymer components which are oriented in a certain direction in the film, and the hydrophobic polymer components are cross-linked in the self-supporting polymer thin film.

Patent Literature 5 discloses a composite semi-permeable membrane consisting of a microporous support and a separation functional layer used for e.g. desalinating seawater. The membrane is manufactured by preparing a substrate with a sacrificial layer, forming a polymer composition layer on the sacrificial layer, adhering a microporous support film to the polymer composition layer, polymerizing the polymer in the polymer composition layer, and removing the sacrificial layer.

### Citation List

### [Patent Literature]

[Patent Literature 1]
   Japanese Patent Application Publication Tokukai No. 2008-285617 (Publication date: November 27, 2008)
[Patent Literature 2]
   Japanese Patent Application Publication Tokukai No. 2012-86477 (Publication date: May 10, 2012)
[Patent Literature 3]
   Japanese Patent Application Publication Tokukai No. 2009-126904 (Publication date: June 11, 2009)
[Patent Literature 4]
   Japanese Patent Application Publication Tokukai No. 2010-275349 (Publication date: December 9, 2010)
[Patent Literature 5]
   Japanese Patent Application 2013/081938 A (Publication Date: May 9, 2013)

### Summary of Invention

### Technical Problem

However, Patent Literatures 1, 3, and 4 have problems that it takes time to remove the sacrificial layer and it is difficult to increase a size of a thin film that is provided on a surface of the sacrificial layer.

In Patent Literature 2, after the fine particle layered membrane of the thin film transferring material is embedded in the surface of the molded article, it is necessary to strip the temporal support off from the molded article covered with the thin film. This causes a problem that the temporal support cannot be directly removed from the thin film transferring material, and it is impossible to solely obtain the fine particle layered membrane.

The present invention is accomplished in view of the problems, and its object is to provide a composite layer material whose size can be easily enlarged and which includes a support film that can be easily removed from a layer other than the support film in a short time.

Moreover, the present invention is accomplished in view of the problems, and its object is to provide a method for efficiently manufacturing a membrane and a layered body in a short time.

### Solution to Problem

In order to attain the object, a composite layer material in accordance with the present invention is defined in claim 1.

In order to attain the object, a membrane manufacturing method in accordance with the present invention is defined in claim 8.

### Advantageous Effects of Invention

According to the composite layer material in accordance with the present invention, it is possible to bring about an effect that a size of the composite layer material can be easily enlarged and the support film can be easily removed from a layer other than the support film in a short time.

According to the method for manufacturing a membrane and the method for manufacturing a layered body in accordance with the present invention, it is possible to bring about an effect of efficiently manufacturing the membrane and the layered body in a short time.

### Brief Description of Drawings

Fig. 1 is a view illustrating processes for manufacturing a composite layer material in accordance with an embodiment of the present invention.
Fig. 2 is a view illustrating processes in a method for manufacturing a membrane in accordance with an embodiment of the present invention.
Fig. 3 is a view illustrating processes in a method for manufacturing a layered body in accordance with an embodiment of the present invention.

### Description of Embodiments

### <Composite layer material 10>

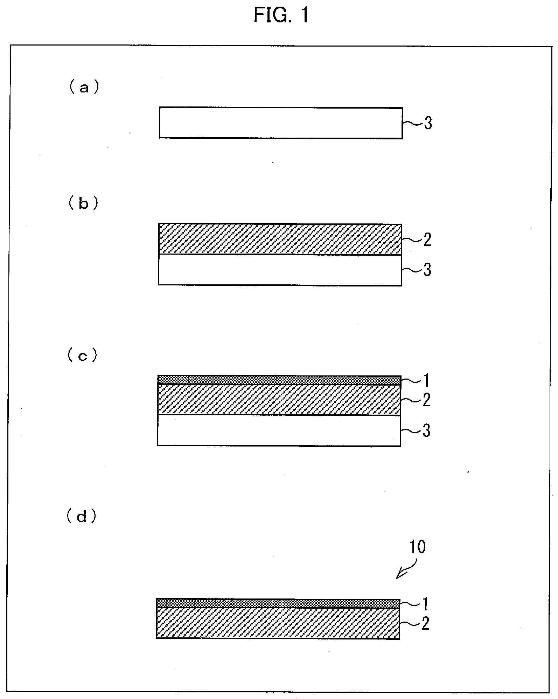

The following description will discuss an example of an embodiment of the present invention, with reference to Fig. 1. Fig. 1 is a view illustrating processes for manufacturing a composite layer material 10 in accordance with an embodiment of the present invention. Note that the composite layer material of the present invention is not limited to a configuration which is obtained by (i) forming a membrane on a support film which is being provided on a substrate and then (ii) stripping the support film off from the substrate, and the composite layer material can be manufactured by continuously forming a membrane on a support film with a roll-to-roll method.

The composite layer material in accordance with the present invention includes at least three layers which are laminated. One of outermost layers of the at least two layers is a support film which (i) is removable from another layer of the at least two layers and (ii) has a self-supporting property.

The composite layer material 10 in accordance with a non-claimed embodiment is formed by laminating a membrane (layer other than the outermost layer) 1 on a support film (outermost layer) 2 (see (d) of Fig. 1).

### (Layers constituting composite layer material)

The composite layer material in accordance with the present invention is formed by at least three layers which are laminated. In further non-claimed embodiment, two layers which are the support film 2 and the membrane 1 are laminated and thus the composite layer material 10 is formed.

Note that the composite layer material in accordance with the present invention is formed by laminating three or more layers.

### (Support film 2)

In the layers constituting the composite layer material 10, the support film 2 is a film that (i) is removable from a layer (membrane 1) other than the support film 2 and (ii) has a self-supporting property. In the claimed embodiment where the composite layer material 10 is formed by laminating three or more layers, the support film 2 corresponds to one of outermost layers.

In this specification, "has a self-supporting property" indicates that (i) the support film has a self-supporting characteristic, (ii) the support film can solely maintain its shape without being held by another support or the like and (iii) the support film will not be irreversibly aggregated into a lump.

The support film 2 is a film that is made of a material which is to be dissolved in a liquid. From this, it is possible to suitably remove the support film 2 from the composite layer material 10 by immersing the support film 2 in a liquid or by spraying, dropping, applying, etc. a liquid to the support film 2.

Examples of a liquid for dissolving the support film 2 encompass water and an aqueous solution. The aqueous solution can be, for example, an acid aqueous solution, an alkaline aqueous solution, an aqueous solution of an organic solvent (alcohol aqueous solution), or the like.

Examples of a material that is used to form the support film 2 and is to be dissolved in water or an aqueous solution encompass polyvinyl alcohol resin, dextrin, gelatin, glue, casein, shellac, gum arabic, starch, protein, polyacrylic acid amide, sodium polyacrylate, polyvinyl methyl ether, a copolymer of methyl vinyl ether and maleic anhydride, a copolymer of vinyl acetate and itaconic acid, polyvinylpyrrolidone, acetyl cellulose, acetyl butylcellulose, carboxymethyl cellulose, methyl cellulose, hydroxyethyl cellulose, sodium alginate, and the like. The materials which are to be dissolved in water or an aqueous solution can be used alone or in combination of two or more of these. Note that the support film 2 can contain a rubber component such as mannan, xanthan gum, or guar gum.

The support film 2 is preferably a polyvinyl alcohol (PVA) resin film particularly in view of (i) production stability, (ii) solubility with respect to water or an aqueous solution, and (iii) economy. Note that the polyvinyl alcohol resin film can contain an additive such as starch or rubber, in addition to PVA. By changing (i) a degree of polymerization and/or a degree of saponification of polyvinyl alcohol and (ii) a mixed amount of an additive such as starch or rubber in the polyvinyl alcohol resin film, it is possible to appropriately adjust mechanical strength which is necessary in forming the membrane 1 on the support film 2, moisture resistance during handling, a speed of tenderization by absorbing water, a time required for spreading or diffusion in water, and the like.

A support film made up of a polyvinyl alcohol resin film is preferably one which is described in Japanese Patent Application Publication Tokukaisho No. 54-92406 (1979), and such a support film (i) is made of, for example, a mixed composition containing 80 mass% of PVA resin, 15 mass% of polymeric water-soluble resin, and 5 mass% of starch and (ii) has approximately 3% of equilibrium moisture. Although the polyvinyl alcohol resin film is water-soluble, the polyvinyl alcohol resin film preferably remains, in a preliminary step of being dissolved in water, as a film while being swollen by water and softened.

A liquid for dissolving the support film 2 can be, for example, an organic solvent. The organic solvent is not limited to a particular one provided that the organic solvent can dissolve the support film 2, and examples of the organic solvent encompass organic solvents of lactones, ketones. polyhydric alcohols, cyclic ethers, and esters; an aromatic organic solvent; an alcohol solvent; a terpene solvent; a hydrocarbon solvent; and a petroleum solvent. These organic solvent can be used alone or in combination of a plurality of these.

The organic solvent of lactones can be γ-butyrolactone or the like. The organic solvent of ketones can be acetone, methyl ethyl ketone, cycloheptanone, cyclohexanone, methyl-n-pentylketone, methylisopentylketone, 2-heptanone, or the like. The organic solvent of polyhydric alcohols can be ethylene glycol, diethylene glycol, propylene glycol, dipropylene glycol, or the like.

The organic solvent of polyhydric alcohols can be a derivative of polyhydric alcohol. Such a derivative can be, for example, a compound having an ester bond (ethylene glycol monoacetate, diethylene glycol monoacetate, propylene glycol monoacetate, dipropylene glycol monoacetate, or the like) or a compound having an ether bond (monoalkyl ether or monophenyl ether (such as monomethyl ether, monoethyl ether, monopropyl ether, or monobutyl ether) of a compound having the polyhydric alcohols or the ester bond). Among these, propylene glycol monomethyl ether acetate (PGMEA) or propylene glycol monomethyl ether (PGME) is preferable.

The organic solvent of cyclic ethers can be dioxane or the like. The organic solvent of esters can be methyl lactate, ethyl lactate (EL), methyl acetate, ethyl acetate, butyl acetate, methyl pyruvate, ethyl pyruvate, methyl methoxypropionate, ethyl ethoxypropionate, or the like.

The aromatic organic solvent can be anisole, ethylbenzyl ether, cresyl methyl ether, diphenyl ether, dibenzyl ether, phenetole, butylphenyl ether, ethylbenzene, diethylbenzene, pentylbenzene, isopropyl benzene, toluene, xylene, cymene, mesitylene, or the like.

The alcohol solvent is not limited to a particular one provided that the alcohol solvent can dissolve the support film 2, and can be, for example, methanol, ethanol, or the like.

The terpene solvent can be, for example, geraniol, nerol, linalool, citral, citronellol, menthol, isomenthol, neomenthol, α-terpineol, β-terpineol, γ-terpineol, terpinene-1-ol, terpinene-4-ol, dihydroterpinyl acetate, 1,4-cineol, 1,8-cineol, borneol, carvone, ionone, thujone, camphor, or the like.

The hydrocarbon solvent can be straight-chain hydrocarbon, branched hydrocarbon, or cyclic hydrocarbon. The hydrocarbon solvent can be, for example, C₃-C₁₅ straight-chain hydrocarbon such as hexane, heptane, octane, nonane, decane, undecane, dodecane, or tridecane; C₄-C₁₅ branched hydrocarbon such as methyl octane; or cyclic hydrocarbon such as p-menthane, o-menthane, m-menthane, diphenylmenthane, 1,4-terpin, 1,8-terpin, bornane, norbornane, pinane, thujane, carane, longifolene, α-terpinene, β-terpinene, γ-terpinene, α-pinene, β-pinene, α-thujone, or β-thujone.

The petroleum solvent can be, for example, cyclohexane, cycloheptane, cyclooctane, naphthalene, decahydronaphthalene (decalin), tetrahydronaphthalene (tetralin), or the like.

Here, a material which is used to form the support film 2 and is to be dissolved in an organic solvent can be, for example, hydrocarbon resin, styrene resin, or the like.

The hydrocarbon resin is not limited to a particular one provided that the resin has a hydrocarbon skeleton and is made by polymerizing a monomer composition. The hydrocarbon resin is made of, for example, a cycloolefin polymer. The cycloolefin polymer can specifically be, for example, a ring-opening (co)polymer of monomer components containing a cycloolefin monomer or resin prepared by addition (co)polymerization of monomer components containing a cycloolefin monomer.

The cycloolefin monomer can be, for example, a two-ring compound such as norbornene or norbornadiene, a three-ring compound such as dicyclopentadiene or dihydroxypentadiene, a four-ring compound such as tetracyclododecene, a five-ring compound such as cyclopentadiene trimer, a seven-ring compound such as tetracyclopentadiene, an alkyl (such as methyl, ethyl, propyl, butyl) substitution, an alkenyl (such as vinyl) substitution, an alkylidene (such as ethylidene) substitution, an aryl (such as phenyl, tolyl, naphthyl) substitution, or the like of these polycyclic compounds. Among these, in particular, it is more preferable to employ norbornene, tetracyclododecene, or a norbornene monomer selected from the group consisting of alkyl-substituted products of these.

The monomer component which constitutes the hydrocarbon resin can contain another monomer which can be copolymerized with the above described cycloolefin monomer. For example, the monomer component preferably contains an alkene monomer. The alkene monomer can be C₂-C₁₀ alkene monomers. For example, the alkene monomer can be α-olefin such as ethylene, propylene, 1-butene, isobutene, or 1-hexene. The alkene monomer can be straight-chain monomers or branched-chain monomers.

The styrene resin is not limited in particular, provided that the resin has a styrene skeleton and is made by polymerizing a monomer composition. Examples of the styrene resin encompass (I) resin obtained by addition (co)polymerization of a monomer component which contains a monomer such as (i) styrene or (ii) hydroxystyrene or alkoxystyrene in which a hydrogen atom in an aromatic ring of styrene is substituted by a hydroxyl group or an alkoxy group and (II) a styrene thermoplastic elastomer.

Among these styrene resins, it is more preferable to use the styrene thermoplastic elastomer. The styrene thermoplastic elastomer is a copolymer of a styrene constitutional unit and an olefin constitutional unit represented by a general formula (1) below, and has an average molecular weight (Mw) of 10000 or more and 300000 or less.

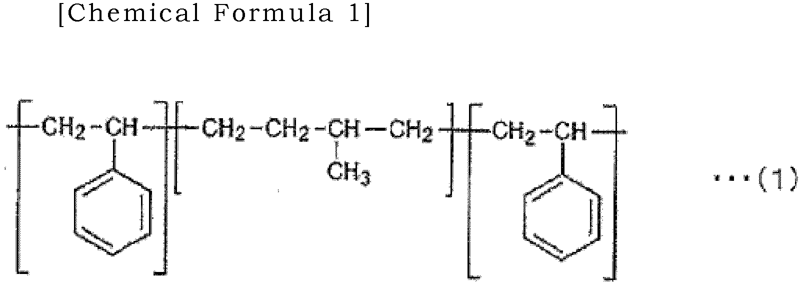

A thickness of the support film 2 is not limited to a particular one, provided that the support film 2 has the self-supporting property. The thickness of the support film 2 is preferably 1 µm or more, more preferably 5 µm or more, further preferably 20 µm or more.

Further, the thickness of the support film 2 is preferably 100 µm or less, more preferably 80 µm or less, further preferably 50 µm or less. By setting the thickness of the support film 2 to 100 µm or less, it is possible to easily dissolve the support film 2 by a liquid for dissolving the support film 2.

Moreover, in the composite layer material 10 in accordance with the present embodiment, the support film 2 has the self-supporting property and it is thus unnecessary to treat the support film 2 while fixing the support film 2 to a substrate such as glass. Further, as compared with a case where the support film 2 is dissolved, in a liquid for dissolving the support film 2, while being fixed to glass or the like, the support film 2 of the composite layer material 10 in accordance with the present embodiment is easily dissolved in the liquid.

From this, according to the composite layer material 10 of the present embodiment, the support film 2 can be dissolved in a shorter time, as compared with a case in which the support film 2 that is being fixed to glass or the like is dissolved in a liquid. It is therefore possible to more efficiently manufacture the membrane 1 from the composite layer material 10 by removing the support film 2. Further, the support film 2 can be more easily removed and restrictions due to the support such as glass, an application method, and the like are less, as compared with a conventional technique. Therefore, it is possible to enlarge a size of a coating membrane 1.

Note that the support film constituting the composite layer material in accordance with the present invention is not limited to a particular one provided that the support film has a self-supporting property, and it is possible to employ, for example, a support film whose quality is changed and which is decomposed by being irradiated with, for example, (i) light such as an ultraviolet ray or (ii) an electron ray. By changing the quality of the support film, it is possible to easily remove the support film from the composite layer material of the present invention in a short time.

### (Membrane 1)

The membrane 1 is formed on the support film 2 in the composite layer material 10. The membrane 1 is not limited to a particular one and can be, for example, membranes such as a hard coat film, a gas barrier membrane, a transparent vapor-deposited film, a hybrid membrane, a light reflection film, a light antireflection film, a conductive film, an antistatic film, an antistatic film, a transparent conductive film, an electromagnetic wave blocking film, a thin film for printing paper, a ferrite film for magnetic tape, a photocatalytic/hydrophilic/antifouling/anti-fogging/water-shedding membrane, a photocatalytic membrane, a hydrophilic and lipophilic membrane, a water-shedding membrane, an anti-fogging film for agriculture, a blocking film, a near-infrared-ray blocking film, an ultraviolet ray protection film, a transparent heat insulation film, and an antibacterial/deodorizing film, which thus have functions; material membranes such as a carbonaceous thin film, a diamond thin film, and a diamond-like carbon membrane; membranes for medical purposes such as a medical membrane, a membrane for bone of living body, an artificial blood vessel membrane, and a membrane for artificial organ; a porous membrane; and the like.

In the claimed embodiment where the composite layer material 10 is made up of three or more layers, the composite layer material 10 can be formed by combining membranes having different ones of the above functions.

A thickness of the membrane 1 is preferably 10 nm or more, more preferably 20 nm or more, further preferably 50 nm or more. In a case where the thickness of the membrane 1 is 10 nm or more, the membrane 1 can suitably maintains its shape even after the support film 2 supporting the membrane 1 is removed.

The thickness of the membrane 1 is preferably 1 µm or less, more preferably 800 nm or less, further preferably 500 nm or less. In a case where the thickness of the membrane 1 is 1 µm or less, the membrane 1 can have flexibility and it is possible to enhance substance penetration, denseness, and the like of the membrane 1.

It is particularly preferable that the membrane 1 is a thin film that has a separating function to separate a certain substance from a mixture containing the certain substance. It is possible to separate the certain substance (which is to be separated) from the mixture by (i) allowing the certain substance to pass through the membrane 1 having the separating function or (ii) allowing substances other than the certain substance to pass through the membrane 1 having the separating function and preventing the certain substance from passing through the membrane 1.

A substance to be separated from the mixture by the membrane 1 which is a thin film is not limited to a particular one and can be gas, liquid, or a solid substance. The gas can be hydrogen, nitrogen, carbon dioxide, or the like which is contained in a g as mixture. The solid substance can be an impurity, fine particles, or the like contained in a solution.

A material constituting the membrane 1 is not limited to a particular one and is preferably (i) a material containing an organic compound having a functional group selected from a vinyl group, a (meth)acrylic group, an epoxy group, a vinyl ether group, an amino group, a hydroxyl group, a carboxyl group, an alkoxycarbonyl group, a mercapto group, an alkyl halide group, an iso(thio)cyanate group, an acid halide group, a phosphono group, and an alkoxyphosphono group or (ii) a material containing at least two of the organic compounds.

The material constituting the membrane 1 is more preferably a material that contains at least one selected from the group consisting of (i) an organic compound having an epoxy group and (ii) an organic compound having an amino group.

Examples of the organic compound having an epoxy group encompass PCGF ((o-cresyl glycidyl ether)-formaldehyde copolymer), tris(4-hydroxyphenyl)methane triglycidyl ether (CAS66072-38-6, mp of 48°C to 50°C), poly(bisphenol A-co-epichlorohydrin), glycidyl end-capped (CAS25036-25-3), and the like. Examples of the organic compound having an amino group encompass polyethyleneimine (PEI), polyallylamine, polyvinylamine, polybutylamine, polylysine, and the like.

The material constituting the membrane 1 is further preferably a material that contains (i) PCGF ((o-cresyl glycidyl ether) -formaldehyde copolymer) which is the organic compound having an epoxy group and (ii) PEI (polyethyleneimine) which is the organic compound having an amino group. The membrane 1 made of the material containing PCGF and PEI can be suitably used as a thin film for separating carbon dioxide, hydrogen, or the like contained in a gas mixture.

The PCGF ((o-cresyl glycidyl ether) -formaldehyde copolymer) is more preferably one represented by a general formula (2) below, where R is a methyl group or hydrogen, X is methylene, and n is an integer of 1 or more and 50 or less.

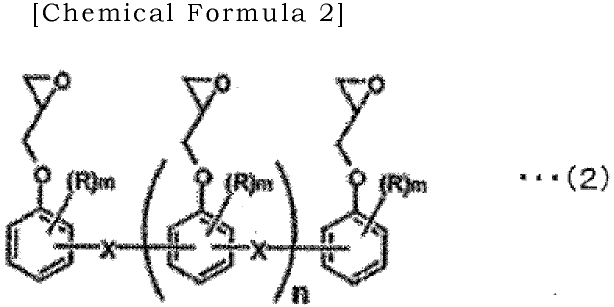

The organic compound having an epoxy group can preferably be bisphenol A type epoxy resin represented by a general formula (3) below.

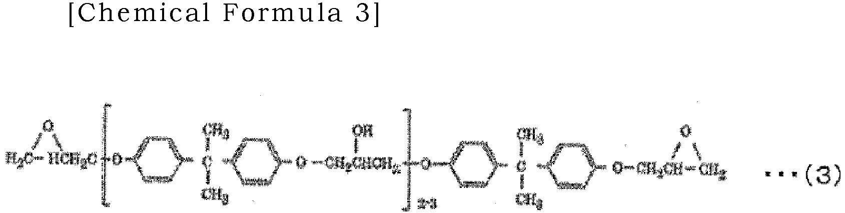

The polyethyleneimine (PEI) is more preferably one represented by a general formula (4) below and has a molecular weight within a range from 300 to 70000.

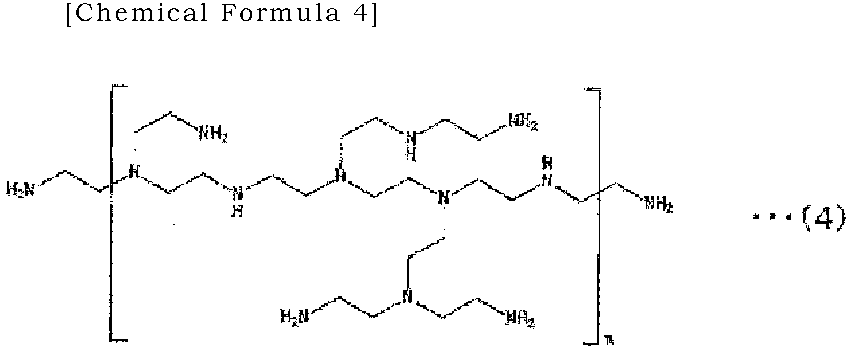

In this case, a ratio between (i) PCGF or bisphenol A type epoxy resin and (ii) PEI is preferably in a range between 10:90 and 90:10, in terms of weight ratio.

According to the composite layer material in accordance with an embodiment, the membrane 1 can contain (i) the organic compound having an epoxy group and (ii) a photo-acid-generating agent which generates protons by being irradiated with light. With this configuration also, it is possible to suitably form the membrane 1 on the support film 2 by, for example, irradiation of light such as an ultraviolet ray.

Examples of the photo-acid-generating agent encompass a triphenylsulfonium photo-acid-generating agent and a diphenyliodonium photo-acid-generating agent. The triphenylsulfonium photo-acid-generating agent can be one represented by a general formula (5) below, where X can be an antimony ion, a hexafluorophosphate ion, or the like.

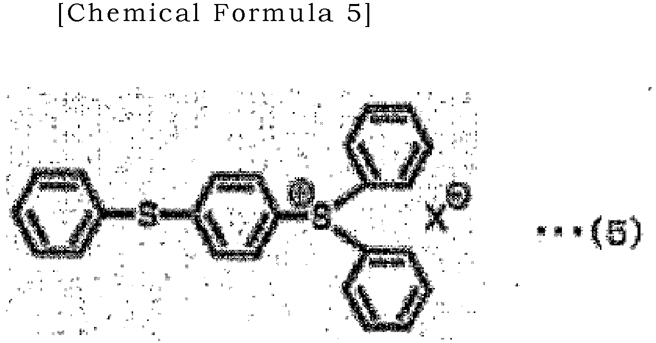

According to the composite layer material in accordance with an embodiment, the membrane 1 can be configured by a material containing metal alkoxide or the like. Examples of the metal alkoxide encompass (i) tetraalkylalkoxysilane and the like and (ii) reactive organosilane such as an oligomer of tetraalkylalkoxysilane and the like. In this case, (i) acid, alkali, and the like and (ii) water can be used as additives for polymerizing the metal alkoxide such as tetraalkylalkoxysilane.

Note that tetraalkylalkoxysilane can be tetramethoxysilane represented by a general formula (6) below.

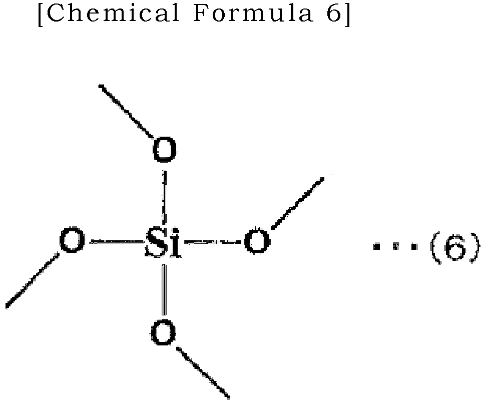

The membrane 1 is formed on the support film 2 by applying a composition containing a material for constituting the membrane 1 and drying, by heat, the composition thus applied. The composition is prepared by adding, to a solvent, the material for constituting the membrane 1 and the like. Examples of the solvent used here encompass ethanol, chloroform, cyclohexanone, diethylene glycol dimethyl ether, ethyl lactate, and the like but the solvent is not limited to these.

The composition can contain a substance for allowing the membrane 1 to have a particular function. The substance can be either an organic compound or an inorganic compound, and examples of the substance encompass pigment, colorant, inorganic fine particles, and the like.

Note that the descriptions regarding the thickness of the membrane 1, the composition of the material constituting the membrane 1, the function of the membrane 1, and the method for preparing the membrane 1 are not limitedly applicable to the membrane 1 that is directly formed on the support film 2. That is, in the claimed embodiment where the composite layer material is formed by laminating three or more layers, the descriptions are applicable to the other layers (e.g., a layer formed on the membrane 1).

### [Production process of composite layer material 10]

The following description will discuss processes of producing the composite layer material 10 in accordance with the embodiment of the present invention, with reference to Fig. 1. Note that the composite layer material of the present invention is not limited to a configuration in which the composite layer material is manufactured by (i) forming a membrane on a support film which is being placed on a substrate and then (ii) stripping the support film off from the substrate. Alternatively, the composite layer material can be manufactured by forming a membrane on an independent support film which has been prepared in advance.

First, as illustrated in (a) and (b) of Fig. 1, a support film 2 is formed on a substrate 3. The support film 2 can be formed on the substrate 3 (i) by attaching the support film 2 to the substrate 3 or (ii) by applying, to the substrate 3, a solution for forming the support film 2.

Next, as illustrated in (c) of Fig. 1, a membrane 1 is formed on the support film 2. A method for forming the membrane 1 on the support film 2 can be a method for forming a thin layer. Such a method can be a spin coating method, a dip coating method, spray coating, or the like. In a case where the spin coating method is employed, the spin coating method is preferably carried out at a number of rotations of 600 rpm or more and 8000 rpm or less. A thickness of the membrane 1 can be adjusted by changing a concentration of a material in the composition used in the present invention, a condition of spin-coating, or the like.

Subsequently, as illustrated in (d) of Fig. 1, the support film 2 is peeled off from the substrate 3, and thus a composite layer material 10 including the membrane 1 and the support film 2 is formed. Although not illustrated, the support film 2 can be suitably removed from the composite layer material 10 by immersing the composite layer material 10 in a liquid for dissolving the support film 2.

In the composite layer material 10 in accordance with the present embodiment, the support film 2 has a self-supporting property, and therefore it is not required to carry out the process while the support film 2 is fixed to the substrate 3. Further, the support film 2 in the composite layer material 10 of the present embodiment is more easily dissolved in the liquid, as compared with a case where the support film 2 which is being fixed to the substrate 3 is immersed in the liquid for dissolving the support film 2.

From this, in the composite layer material 10 of the present embodiment, it is possible to dissolve the support film 2 in a shorter time, as compared with a case where the support film 2 which is being fixed to the substrate 3 is dissolved in the liquid. It is therefore possible to more efficiently manufacture the membrane 1 by removing the support film 2 from the composite layer material 10. Further, the support film 2 can be more easily removed and restrictions due to the support such as glass, an application method, and the like are less, as compared with a conventional technique. From this, it is possible to enlarge a size of the membrane 1.

The substrate 3 is not limited to a particular one, provided that the support film 2 can be formed on a surface of the substrate 3. Note, however, that it is preferable that the support film 2 formed on the substrate 3 can be easily stripped off from the substrate 3. Specific examples of the substrate 3 encompass a glass substrate, a silicon substrate, a PET film, and the like, and the substrate 3 is not limited to these. In view of easily stripping off the support film 2 formed on the substrate 3, a known release treatment can be carried out on the surface of the substrate 3 on which the support film 2 is to be formed.

The composite layer material of the present invention can be continuously manufactured by a roll-to-roll method or the like. For example, a membrane can be formed on a support film by applying, by spray coating or the like, a composition that contains a material for constituting the membrane to a surface of the support film which is being transferred. This makes it possible to manufacture the composite layer material which is in a roll form and is excellent in processing cost and productivity.

### <Method for manufacturing membrane>

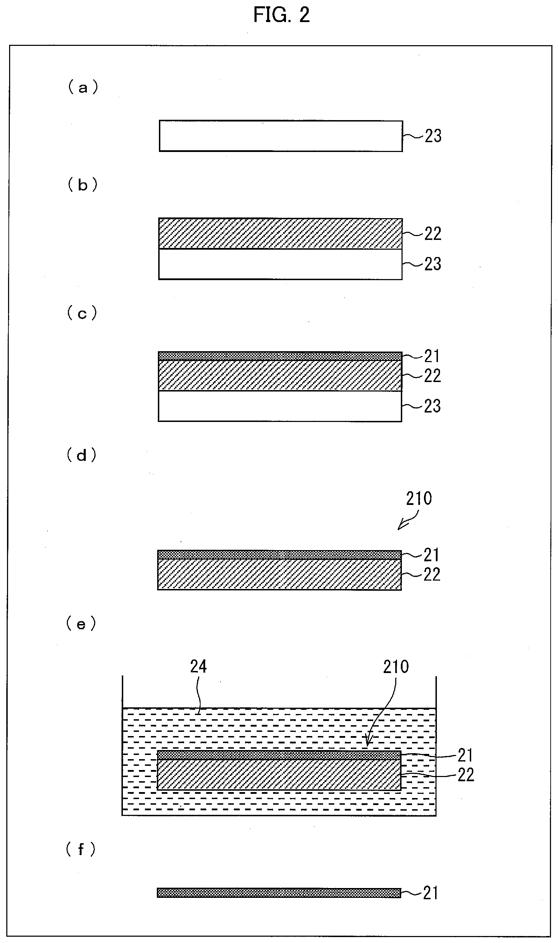

The following description will discuss an example of the embodiment of the present invention in detail, with reference to Fig. 2. Fig. 2 is a view illustrating processes in a method for manufacturing a membrane in accordance with an embodiment of the present invention.

A method of the present invention for manufacturing a membrane includes the steps of (a) forming at least one membrane on a support film having a self-supporting property and (b) removing the support film after the step (a). According to the membrane manufacturing method of the present embodiment, a membrane 21 is manufactured by removing a support film 22 from a composite layer material 210 that is made up of the membrane 21 and the support film 22. First, the following describes details of a configuration of the membrane 21 and the support film 22.

### (Support film 22)

The support film 22 is a film which has a self-supporting property and is used to form the membrane 21 on a surface of the film.

The support film 22 is a film that is made of a material which is to be dissolved in a liquid. From this, it is possible to suitably remove the support film 22 from the composite layer material 210 by immersing the support film 22 in a liquid or by spraying, dropping, applying, etc. a liquid to the support film 22.

As a liquid for dissolving the support film 22, it is possible to employ a liquid that is identical with the liquid for dissolving the above described support film 2.

The material that is used to form the support film 22 and is to be dissolved in water or an aqueous solution can be, for example, the material that is used to form the above described support film 2 and is to be dissolved in water or an aqueous solution.

The material of the support film 22 can be, for example, identical with that of the above described support film 2.

The support film made up of a polyvinyl alcohol resin film is suitably similar to the one described in relation to the support film 2.

A liquid for dissolving the support film 22 can be identical with the liquid for dissolving the above described support film 2.

Here, a material that is used to form the support film 22 and is to be dissolved in an organic solvent can be, for example, the material that is used to form the above described support film 2 and is to be dissolved in an organic solvent.

A thickness of the support film 22 is similar to that of the above described support film 2.

Moreover, in the composite layer material 210 in accordance with the present embodiment, the support film 22 has the self-supporting property and it is thus unnecessary to treat the support film 22 while fixing the support film 22 to a substrate such as glass. Further, as compared with a case where the support film 22 is dissolved, in a liquid for dissolving the support film 22, while being fixed to glass or the like, the support film 22 of the composite layer material 210 in accordance with the present embodiment is easily dissolved in the liquid.

From this, according to the composite layer material 210 of the present embodiment, the support film 22 can be dissolved in a shorter time, as compared with a case in which the support film 22 that is being fixed to glass or the like is dissolved in a liquid. It is therefore possible to more efficiently manufacture the membrane 21 from the composite layer material 210 by removing the support film 22. Further, the support film 22 can be more easily removed and restrictions due to the support such as glass, an application method, and the like are less, as compared with a conventional technique. From this, it is possible to enlarge a size of the membrane 21.

Note that the support film constituting the composite layer material in accordance with the present invention is not limited to a particular one provided that the support film has a self-supporting property, and it is possible to employ, for example, a support film whose quality is changed and which is decomposed by being irradiated with, for example, (i) light such as an ultraviolet ray or (ii) an electron ray. By changing the quality of the support film, it is possible to easily remove the support film from the composite layer material of the present invention in a short time.

### (Membrane 21)

The membrane 21 is a membrane that is formed on the support film 22 by a membrane forming step. The membrane 21 is not limited to one described below, and can be, for example, similar to the above described membrane 1.

In the claimed embodiment where the composite layer material 210 includes two or more membranes, the composite layer material 210 can be formed by combining membranes having different ones of the foregoing functions.

A thickness of the membrane 21 is similar to that of the above described membrane 1.

It is particularly preferable that the membrane 21 is a porous membrane that has a separating function to separate a certain substance from a mixture containing the certain substance. It is possible to separate the certain substance (which is to be separated) from the mixture by (i) allowing the certain substance to pass through the membrane 21 having the separating function or (ii) allowing substances other than the certain substance to pass through the membrane 21 having the separating function and preventing the certain substance from passing through the membrane 21.

A substance to be separated from the mixture by the membrane 21 which is a thin film is not limited to a particular one and can be gas, liquid, or a solid substance. The gas can be hydrogen, nitrogen, carbon dioxide, or the like which is contained in a gas mixture. The solid substance can be an impurity, fine particles, or the like contained in a solution.

The material constituting the membrane 21 is not limited to a particular one and can be, for example, identical with the material constituting the above described membrane 1.

The membrane 21 is formed on the support film 22 by applying a composition containing a material for constituting the membrane 21 and drying, by heat, the composition thus applied. The composition is prepared by adding, to a solvent, the material constituting the membrane 21 and the like. Examples of the solvent used here encompass ethanol, chloroform, cyclohexanone, diethylene glycol dimethyl ether, ethyl lactate, and the like but the solvent is not limited to these.

The composition can contain a substance for allowing the membrane 21 to have a particular function. The substance can be either an organic compound or an inorganic compound, and examples of the substance encompass pigment, colorant, inorganic fine particles, and the like.

Note that the descriptions regarding the thickness of the membrane 21, the composition of the material constituting the membrane 21, the function of the membrane 21, and the method for preparing the membrane 21 are not limitedly applicable to the membrane 21 that is directly formed on the support film 22. That is, in the claimed embodiment where the composite layer material is formed by laminating three or more layers, the descriptions are applicable to the other layers (e.g., a layer formed on the membrane 21).

### [Production process of membrane 21]

The following description will discuss steps in the membrane manufacturing method in accordance with an embodiment of the present invention. Note that the membrane manufacturing method of the present invention is not limited to a configuration in which the membrane is manufactured by (i) forming a membrane on a support film which is being placed on a substrate and then (ii) stripping the support film off from the substrate. Alternatively, the membrane can be manufactured by forming a membrane on an independent support film which has been prepared in advance.

First, as illustrated in (a) and (b) of Fig. 2, a support film 22 is formed on a substrate 23. The support film 22 can be formed on the substrate 23 (i) by attaching the support film 22 to the substrate 23 or (ii) by applying, to the substrate 23, a solution for forming the support film 22.

### (Membrane forming step)

Next, as illustrated in (c) of Fig. 2, a membrane 21 is formed on the support film 22 having a self-supporting property (membrane forming step). A method for forming the membrane 21 on the support film 22 can be a method for forming a thin layer. Such a method can be a spin coating method, a dip coating method, spray coating, or the like. In a case where the spin coating method is employed, the spin coating method is preferably carried out at a number of rotations of 600 rpm or more and 8000 rpm or less. A thickness of the membrane 21 can be adjusted by changing a concentration of a material in the composition used in the present invention, a condition of spin-coating, or the like.

Subsequently, as illustrated in (d) of Fig. 2, the support film 22 is peeled off from a substrate 23, and thus a composite layer material 210 including the membrane 21 and the support film 22 is formed.

### (Support film removing step)

After the composite layer material 210 is formed, the support film 22 is removed from the composite layer material 210 (support film removing step). In the present embodiment, as illustrated in (e) of Fig. 2, the composite layer material 210 is immersed in a bath 24 which contains a liquid for dissolving the support film 22, and thus the support film 22 can be suitably removed from the composite layer material 210. A time for which the composite layer material 210 is immersed in the liquid contained in the bath 24 for dissolving the support film 22 in the liquid is preferably 1 minute or more and 30 minutes or less, more preferably 5 minutes or more and 10 minutes or less.

As above described, the membrane 21 can be manufactured (see (f) of Fig. 2).

In the composite layer material 210, the support film 22 has a self-supporting property, and therefore it is not required to carry out the process while the support film 22 is fixed to the substrate 23. Further, the support film 22 in the composite layer material 210 of the present embodiment is more easily dissolved in the liquid, as compared with a case where the support film 22 which is being fixed to the substrate 23 is immersed in the liquid for dissolving the support film 22.

From this, in the membrane manufacturing method of the present embodiment, it is possible to dissolve the support film 22 in a shorter time, as compared with a case where the support film 22 which is being fixed to the substrate 23 is dissolved in the liquid. It is therefore possible to more efficiently manufacture the membrane 21 by removing the support film 22 from the composite layer material 210. Further, the support film 22 can be more easily removed and restrictions due to the support such as glass, an application method, and the like are less, as compared with a conventional technique. From this, it is possible to enlarge a size of the membrane 21.

The substrate 23 is not limited to a particular one, provided that the support film 22 can be formed on a surface of the substrate 23. Note, however, that it is preferable that the support film 22 formed on the substrate 23 can be easily stripped off from the substrate 23. Specific examples of the substrate 23 encompass a glass substrate, a silicon substrate, a PET film, and the like, and the substrate 23 is not limited to these. In view of easily stripping off the support film 22 formed on the substrate 23, a known release treatment can be carried out on the surface of the substrate 23 on which the support film 22 is to be formed.

The membrane manufacturing method of the present invention is not limited to the above described method in which a membrane is manufactured through the step of forming a support film on a substrate. That is, in the present invention, a membrane can be continuously manufactured by a roll-to-roll method or the like. For example, a membrane can be formed on a support film by applying, by spray coating or the like, a composition that contains a material for constituting the membrane to a surface of the support film which is being transferred. This makes it possible to manufacture the composite layer material which is in a roll form and is excellent in processing cost and productivity.

### <Method for manufacturing layered body>

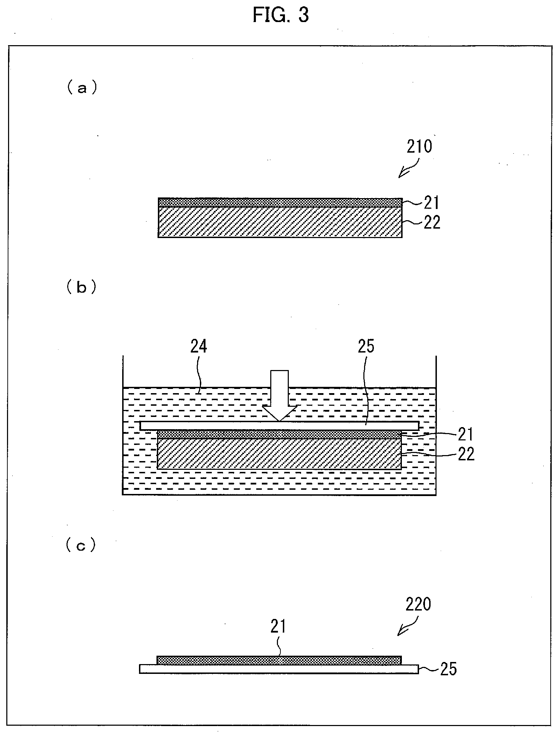

The following description will discuss processes in the method of the present embodiment for manufacturing a layered body, with reference to Fig. 3. Fig. 3 is a view illustrating processes in a method for manufacturing a layered body in accordance with an embodiment of the present invention. First, the following describes a layered body 220 that is manufactured with the method of the present embodiment for manufacturing a layered body.

### (Layered body 220)

The layered body 220 is manufactured by laminating a support 25 on a membrane 21. Note that the layered body of the present invention can be manufactured by laminating a support on a plurality of membranes.

The support constituting the layered body can be a metal plate such as a silicon wafer, nickel, or the like. A surface which is of the support and on which an outermost membrane is supported can be subjected to surface treatment, surface processing, or the like.

### (Support laminating step)

After the membrane forming step, first, a support 25 is laminated on a membrane 21 (support laminating step). As an aspect, as illustrated in (a) and (b) of Fig. 3, the support 25 can be laminated on the membrane 21 by pressing the support 25 onto the surface of the membrane 21 of the composite layer material 210 in the bath 24 containing a liquid. In a case where the liquid in the bath 24 dissolves the support film 22, the support 25 can be laminated, while the support film 22 is being removed, on a side of the membrane 21 which side is different from another side of the membrane 21 on which another side the support film 22 is formed. As such, the support film removing step and the support laminating step can be simultaneously carried out, and thus the layered body 220 in which the membrane 21 and the support 25 are laminated as illustrated in (c) of Fig. 3 can be manufactured in a short time.

In the support laminating step in the method for manufacturing a layered body in accordance with the present embodiment, the composite layer material 210 and the support 25 are immersed in the liquid contained in the bath 24, and the surface of the membrane 21 included in the composite layer material 210 is pressed by the support 25. From this, while the composite layer material 210 is being pressed by the support 25, pressure of the liquid contained in the bath 24 is applied in an opposite direction of a pressing direction, i.e., pressure of the liquid contained in the bath 24 is applied in a direction from the membrane 21 to the support 25. This makes it possible to firmly bond the support 25 to the membrane 21. In the present embodiment, the composite layer material 210 is pressed via the support 25. Note, however, that the present embodiment is not limited to this, and it is possible that the support 25 is first immersed in the liquid contained in the bath 24 and then the composite layer material 210 is immersed in the liquid so that the membrane 21 and the support 25 face each other and the composite layer material 210 is thus pressed.

In a case where a composite layer material roll is manufactured by a roll-to-roll method or the like, a membrane and a support can be laminated by pressing the membrane in a composite layer material sheet constituting the composite layer material roll by the support. In this case, it is possible that a bath containing a liquid for dissolving a support film is provided under the composite layer material sheet and the membrane is pressed by the support toward the bath. This makes it possible to firmly bond the support to the membrane while the support film is being removed. Alternatively, it is possible that a membrane is formed on a surface of a support film while the support film is being transferred, and then the support film on which the membrane has been formed is further transferred so that the membrane is pressed by a support. This makes it possible to sequentially form the membrane on the support film and bond the support to the membrane.

Further, since the composite layer material roll is used, it is possible to continuously laminate the membrane on the support, and this makes it possible to efficiently manufacture, in a shorter time, the layered body in which the membrane and the support are laminated.

Note that the method for manufacturing the layered body in which the membrane and the support are laminated is not limited to the present embodiment. Therefore, it is possible that (i) the support is laminated on the membrane in the support laminating step after the support film is removed in the support film removing step or (ii) the support film is removed in the support film removing step after the support is laminated on the membrane in the support laminating step.

The following description will discuss details of the embodiment of the present invention with reference to Examples. The present invention is of course not limited to the Examples below and particulars can have various aspects. Further, the present invention is not limited to the embodiments, but can be altered by a skilled person in the art within the scope of the claims. An embodiment derived from a proper combination of technical means disclosed in respective different embodiments is also encompassed in the technical scope of the present invention. Moreover, all the literatures described in this specification are hereby incorporated by reference.

### [Examples]

### [Example 1]

### [Experiment 1: Solubility of support film]

### (Preparation of membrane composition)

In order to prepare a membrane composition, a resin A and a resin B below are used:

The resin A is cresol novolac epoxy resin (with molecular weight of 2000) represented by a general formula (2') below:

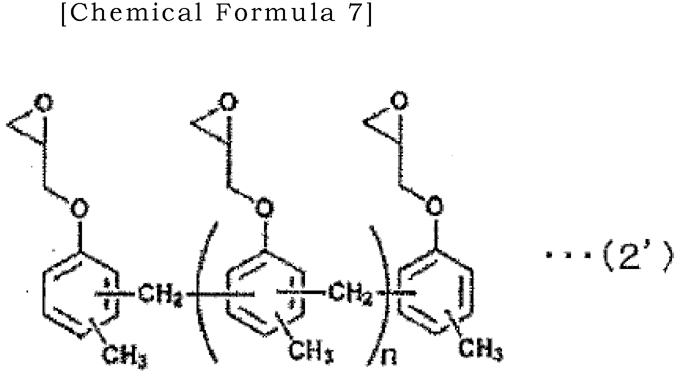

The resin B is polyethyleneimine (with molecular weight of 10000) represented by a general formula (4) below:

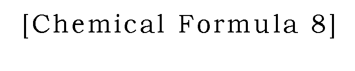

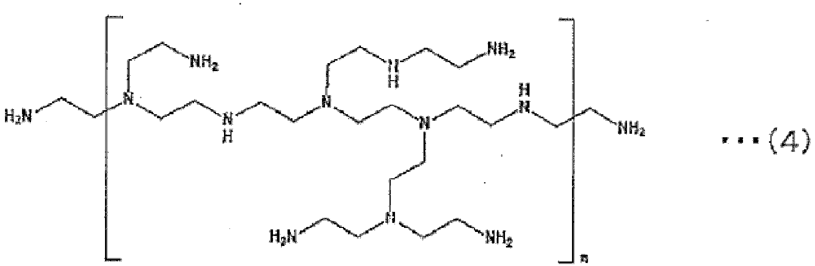

50 parts by weight of the resin A and 50 parts by weight of the resin B were dissolved in 4900 parts by weight of ethyl lactate (EL), and a membrane composition (i.e., a composition containing a material for constituting a membrane) was thus obtained.

### (Formation of composite layer material)

Next, a composite layer material was formed by use of the membrane composition and a water-soluble film ("Hi-Selon C-200", thickness of 50 µm, manufactured by Nippon Synthetic Chemical Industry Co., Ltd.) made of polyvinyl alcohol.

The Hi-Selon C-200 was attached to a 6-inch silicon substrate, heated up at 80°C, and pressed by a roller under conditions of 3 kgf/cm² and 0.4 m/min. Thus, the Hi-Selon C-200 was laminated on the 6-inch silicon substrate.

Next, the membrane composition was applied to one surface of the support film with use of a spinner, and was then dried at 120°C for 300 seconds in a drying furnace. Thus, a membrane having a thickness of 100 nm was formed on the support film.

Subsequently, a composite layer material made up of the membrane and the support film was stripped off from the silicon substrate.

### (Dissolution of support film)

Next, the support film was dissolved by immersing the composite layer material in water. It took 10 minutes to strip (release) the membrane off from the composite layer material. Moreover, a state of the membrane after the support film had been dissolved was good.

### (Preparation of layered body)

After the support film was dissolved in water, a porous membrane filter (manufactured by Advantech Japan, Co., Ltd., a polycarbonate type, dimensions (diameter of 25 mm), pore diameter of 0.2 µm, thickness of 10 µm) was closely bonded to the membrane that was being floated in the water. Thus, a layered body made up of the porous membrane filter and the membrane was prepared.

### [Example 2]

### (Preparation of membrane composition)

50 parts by weight of the resin A and 50 parts by weight of the resin B were dissolved in 4900 parts by weight of ethyl lactate (EL), and a membrane composition was thus obtained.

### (Formation of composite layer material)

First, the Hi-Selon C-200 was attached to a 6-inch silicon substrate, heated up at 80°C, and pressed by a roller under conditions of 3 kgf/cm² and 0.4 m/min. Thus, the Hi-Selon C-200 was laminated on the 6-inch silicon substrate. As such, a support film having a film thickness of 50 µm was formed on the silicon substrate.

Next, the membrane composition was (i) applied, with a spray coating device (Exacta Coat manufactured by Sono-Tek Corporation), to a surface of the support film which had been formed on the silicon substrate and then (ii) dried at 120°C for 300 seconds in a drying furnace. Thus, a membrane having a thickness of 100 nm was formed on the support film.

Subsequently, a composite layer material made up of the membrane and the support film was stripped off from a silicon substrate.

### (Dissolution of support film)

Next, the support film was dissolved by immersing the composite layer material in water. It took 10 minutes to strip (release) the membrane off from the composite layer material, as with Example 1. Moreover, a state of the membrane after the support film had been dissolved was good.

### [Example 3]

### (Preparation of membrane composition)

50 parts by weight of the resin A and 50 parts by weight of the resin B were dissolved in 4900 parts by weight of ethyl lactate (EL), and a membrane composition was thus obtained.

### (Formation of composite layer material)

First, Hi-Selon C-200 (thickness of 50 µm) was used as a support film.

Next, the membrane composition was (i) applied, with a spray coating device (Exacta Coat manufactured by Sono-Tek Corporation), to a surface of the support film and then (ii) dried at 120°C for 300 seconds in a drying furnace. Thus, a membrane having a thickness of 100 nm was formed on the support film. As such, a composite layer material made up of the membrane and the support film was obtained.

### (Dissolution of support film)

Next, the support film was dissolved by immersing the composite layer material in water. It took 10 minutes to strip (release) the membrane off from the composite layer material, as with Example 1. Moreover, a state of the membrane after the support film had been dissolved was good.

### [Example 4]

### (Preparation of membrane composition)

50 parts by weight of the resin A and 50 parts by weight of the resin B were dissolved in 4900 parts by weight of ethyl lactate (EL), and a membrane composition was thus obtained.

### (Formation of composite layer material)

First, a support film was formed with use of a resin C which was a styrene thermoplastic elastomer (Mw = 70000) represented by a general formula (1) below:

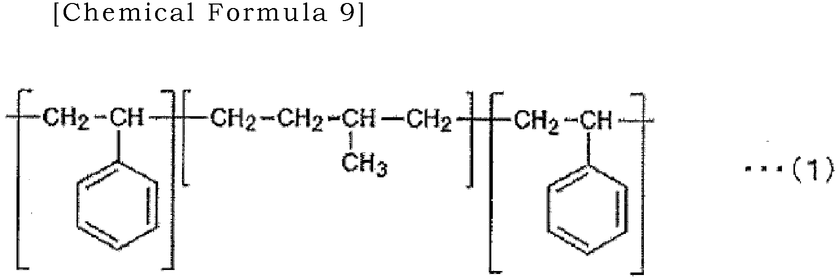

In decahydronaphthaline, 25 mass% of the resin C was dissolved, and thus a support film composition (a composition containing a material for constituting a support film) was obtained. The support film composition was applied to a PET base material (thickness of 100 µm) with use of a roll coater. Next, the PET base material was (i) bonded, via the support film composition, to a substrate which was a glass substrate (6 inches) having a through hole (pore diameter of 300 µm), (ii) heated at 80°C, and (iii) pressed under conditions of 3 kgf/cm² and 0.4 m/min with use of a roller. Thus, the PET base material, the support film composition, and the glass substrate were laminated. Subsequently, the PET base material was peeled off, and thus a support film having a film thickness of 50 µm was formed on the glass substrate.

Next, the membrane composition was (i) applied, with use of a spinner, to a surface of the support film which surface had been in contact with the PET base material and then (ii) dried at 120°C for 300 seconds in a drying furnace. Thus, a membrane having a thickness of 100 nm was formed on the support film.

Subsequently, the composite layer material made up of the membrane and the support film was stripped off from the glass substrate.

### (Dissolution of support film)

Next, the support film was dissolved by immersing the composite layer material in p-menthane. It took 10 minutes to strip (release) the membrane off from the composite layer material. Moreover, there was no abnormality in state of the membrane after the support film had been dissolved.

### [Example 5]

### (Preparation of membrane composition)

100 parts by weight of the resin A was dissolved in 1300 parts by weight of propylene glycol monomethyl ether acetate (PGMEA) and 3 parts by weight of a photo-acid-generating agent A represented by a general formula (5) below was further added, and a membrane composition (i.e., a composition containing a material for constituting a membrane) was thus obtained.

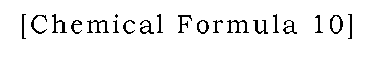

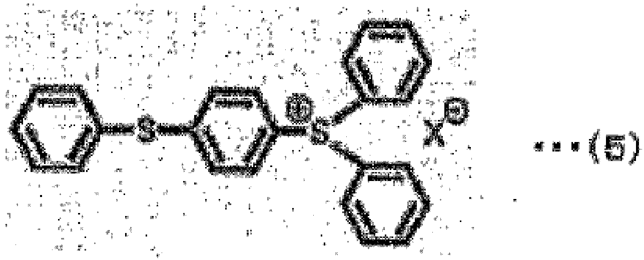

Note that, in the general formula (5), X is hexafluorophosphate ion (PF₆).

### (Formation of composite layer material)

A support film composition which contained the resin C and had been prepared in procedures identical with those in Example 4 was applied to a PET base material (thickness of 100 µm) with use of a roll coater.

Next, the PET base material was (i) bonded, via the support film composition, to a substrate which was a glass substrate (6 inches) having a through hole (pore diameter of 300 µm), (ii) heated at 80°C, and (iii) pressed under conditions of 3 kgf/cm² and 0.4 m/min with use of a roller. Thus, the PET base material, the support film composition, and the glass substrate were laminated. Subsequently, the PET base material was peeled off, and thus a support film having a film thickness of 50 µm was formed on the glass substrate.

Next, the membrane composition was (i) applied, with use of a spinner, to a surface of the support film which surface had been in contact with the PET base material and then (ii) dried at 90°C for 180 seconds in a drying furnace. Subsequently, the membrane composition was exposed to light with use of a parallel light exposure device (MAT-2501 manufactured by Hakuto Co., Ltd.) under a condition of 100 mJ, and heated up at 120°C for 180 seconds. Thus, a membrane having a thickness of 100 nm was formed on the support film.

Subsequently, the composite layer material made up of the membrane and the support film was stripped off from the glass substrate.

### (Dissolution of support film)

Next, the support film was dissolved by immersing the composite layer material in p-menthane. It took 10 minutes to strip (release) the membrane off from the composite layer material. Moreover, a state of the membrane after the support film had been dissolved was good.

### [Example 6]

### (Preparation of membrane composition)

First, a membrane composition was prepared with use of a resin D which was a bisphenol A type epoxy resin represented by a general formula (3) below.

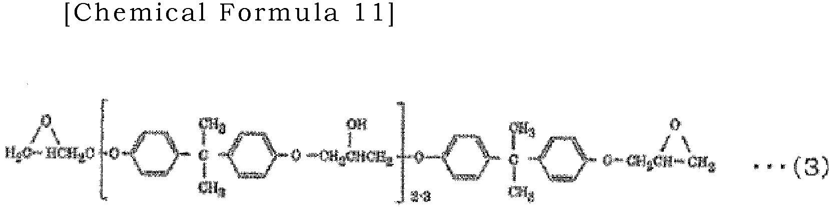

100 parts by weight of the resin D was dissolved in 1600 parts by weight of PGMEA and 3 parts by weight of the photo-acid-generating agent A was further added, and a membrane composition (i.e., a composition containing a material for constituting a membrane) was thus obtained.

### (Formation of composite layer material)

A support film composition which contained the resin C and had been prepared in procedures identical with those in Example 4 was applied to a PET base material (thickness of 100 µm) with use of a roll coater.

Next, the PET base material was (i) bonded, via the support film composition, to a substrate which was a glass substrate (6 inches) having a through hole (pore diameter of 300 µm), (ii) heated at 80°C, and (iii) pressed under conditions of 3 kgf/cm² and 0.4 m/min with use of a roller. Thus, the PET base material, the support film composition, and the glass substrate were laminated. Subsequently, the PET base material was peeled off, and thus a support film having a film thickness of 50 µm was formed on the glass substrate.

Next, the membrane composition was (i) applied, with use of a spinner, to a surface of the support film which surface had been in contact with the PET base material and then (ii) dried at 90°C for 180 seconds in a drying furnace. Subsequently, the membrane composition was exposed to light with use of a parallel light exposure device (MAT-2501 manufactured by Hakuto Co., Ltd.) under a condition of 100 mJ, and heated up at 120°C for 180 seconds. Thus, a membrane having a thickness of 100 nm was formed on the support film.

Subsequently, the composite layer material made up of the membrane and the support film was stripped off from the glass substrate.

### (Dissolution of support film)

Next, the support film was dissolved by immersing the composite layer material in p-menthane. It took 10 minutes to strip (release) the membrane off from the composite layer material. Moreover, a state of the membrane after the support film had been dissolved was good.

### [Example 7]

### (Preparation of membrane composition)

First, a membrane composition was prepared with use of tetramethoxysilane represented by a general formula (6) below.

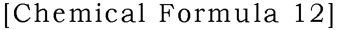

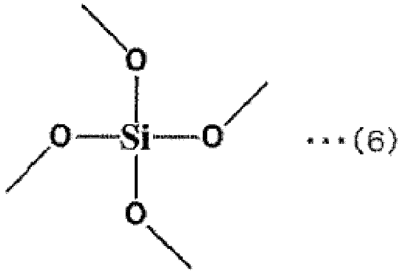

100 parts by weight of tetramethoxysilane was dissolved in 1150 parts by weight of ethanol, and 100 parts by weight of water and 0.2 part by weight of nitric acid were further added. Thus, a membrane composition was obtained.

### (Formation of composite layer material)

Hi-Selon C-200 was attached to a 6-inch silicon substrate, heated up at 80°C, and pressed under a condition of 3 kgf/cm². Thus, the Hi-Selon C-200 was laminated on the 6-inch silicon substrate. As such, a support film having a film thickness of 50 µm was formed on the silicon substrate.

Next, the membrane composition was applied to one surface of the support film with use of a spinner, and then dried at 90°C for 180 seconds in a drying furnace. Thus, a membrane having a thickness of 200 nm was formed on the support film.

Subsequently, the composite layer material made up of the membrane and the support film was stripped off from the silicon substrate.

### (Dissolution of support film)

Next, the support film was dissolved by immersing the composite layer material in water. It took 10 minutes to strip (release) the membrane off from the composite layer material. Moreover, a state of the membrane after the support film had been dissolved was good.

Table 1 below shows conditions for forming the composite layer materials of Examples 1 through 7 and evaluation results.

**[Table 1]**

| | | | Example 1 | Example 2 | Example 3 | Example 4 | Example 5 | Example 6 | Example 7 |
|---|---|---|---|---|---|---|---|---|---|
| Membrane | Resin 1 | | Resin A (50 parts) | Resin A (50 parts) | Resin A (50 parts) | Resin A (50 parts) | Resin A (100 parts) | Resin D (100 parts) | Tetramethoxysilane (100 parts) |
| | Resin 2 | | Resin B (50 parts) | Resin B (50 parts) | Resin B (50 parts) | Resin B (50 parts) | - | - | |
| | Main Solvent | | Ethyl Lactate (4900 parts) | Ethyl Lactate (4900 parts) | Ethyl Lactate (4900 parts) | Ethyl Lactate (4900 parts) | PGMEA (1300 parts) | PGMEA (1600 parts) | Ethanol (1150 parts) |
| | Additive | | - | - | - | - | Photo-acid-generating Agent A | Photo-acid-generating Agent A | Nitric Acid/Water |
| | Film Thickness (nm) | | 100 | 100 | 100 | 100 | 100 | 100 | 200 |
| | Membrane Formation Conditions | Application Method | Spin Coating | Spray Coating | Spray Coating | Spin Coating | Spin Coating | Spin Coating | Spin Coating |
| | | Heating Conditions | 120°C | 120°C | 120°C | 120°C | 90°C | 90°C | 90°C |
| | | | 5 min | 5 min | 5 min | 5 min | 3 min | 3 min | 3 min |
| | | Light Exposure Amount (mJ) | - | - | - | - | 100 | 100 | - |
| | | Heating after Light Exposure | - | - | - | - | 120°C | 120°C | - |
| | | | | | | | 3 min | 3 min | |
| Support Film | Resin | | Hi-Selon | Hi-Selon | Hi-Selon | Resin C | Resin C | Resin C | Hi-Selon |
| | Main Solvent | | - | - | - | Decahydronaphthaline | Decahydronaphthaline | Decahydronaphthaline | - |
| | Film Thickness (nm) | | 50 | 50 | 50 | 50 | 50 | 50 | 50 |
| | Membrane Formation Conditions | Application Method | Laminate | Laminate | - | Laminate | Laminate | Laminate | Lammate |
| | | Application Conditions | 3 kgf/cm² | 3 kgf/cm² | - | 3 kgf/cm² | 3 kgf/cm2 | 3 kgf/cm² | 3 kgf/cm2 |
| | | | 0.4 m/min | 0.4 m/min | | 0.4 m/min | 0.4 m/min | 0.4 m/min | 0.4 m/min |
| | | Heating Conditions | 80°C | 80°C | 80°C | 80°C | 80°C | 80°C | 80°C |
| Substrate | Type of Substrate | | Silicon Substrate | Silicon Substrate | None | Grass Substrate with Hole | Grass Substrate with Hole | Grass Substrate with Hole | Silicon Substrate |
| | Existence/Absence of Support while Dissolution | | None | None | None | None | None | None | None |
| | Stripping Solution | | Water | Water | Water | p-menthane | p-menthane | p-menthane | Water |
| | Stripping Time | | 10 minutes | 10 minutes | 10 minutes | 10 minutes | 10 minutes | 10 minutes | 10 minutes |

### [Comparative Example 1]

### (Preparation of membrane composition)

50 parts by weight of the resin A and 50 parts by weight of the resin B were dissolved in 4900 parts by weight of chloroform, and a membrane composition was thus obtained.

### (Formation of composite layer material)

First, a support film composition was prepared by using polyhydroxystyrene (PHS) as a raw material.

A PHS solution was applied to a 6-inch silicon substrate with use of a spinner, and dried at 120°C for 60 seconds in a drying furnace. Thus, a support film (film thickness of 1 µm) was prepared. Next, the membrane composition was applied to one surface of the support film with use of a spinner and then dried at 120°C for 300 seconds in a drying furnace. Thus, a membrane having a thickness of 100 nm was formed on the support film.

Subsequently, the support film was dissolved as described below without peeling the composite layer material made up of the membrane and the support film off from the silicon substrate, that is, the support film was dissolved in a state in which the composite layer material was being bonded to the silicon substrate.

### (Dissolution of support film)

Next, the support film was dissolved by immersing, in ethanol, the composite layer material which was being bonded to the silicon substrate. It took 5 hours to strip (release) the membrane off from the composite layer material. Moreover, there was no abnormality in state of the membrane after the support film had been dissolved.

### [Comparative Example 2]

### (Preparation of membrane composition)

50 parts by weight of the resin A and 50 parts by weight of the resin B were dissolved in 4900 parts by weight of ethyl lactate (EL), and a membrane composition was thus obtained.

### (Formation of composite layer material)

First, a support film composition was prepared by using polyhydroxystyrene (PHS) as a raw material.

A PHS solution was applied to a 6-inch silicon substrate, and dried at 120°C for 60 seconds in a drying furnace. Thus, a support film was prepared and the membrane composition was applied to one surface of the support film with use of a spinner. However, the membrane composition could not be uniformly applied to the support film.

### [Comparative Example 3]

### (Preparation of membrane composition)

50 parts by weight of the resin A and 50 parts by weight of the resin B were dissolved in 4900 parts by weight of ethyl lactate (EL), and a membrane composition was thus obtained.

### (Formation of composite layer material)

First, a support film composition which contained the resin C and had been prepared in procedures identical with those in Example 4 was applied to a PET base material (thickness of 100 µm) with use of a roll coater. Next, the PET base material was (i) bonded, via the support film composition, to a substrate which was a 6-inch silicon substrate, (ii) heated at 80°C, and (iii) pressed under conditions of 3 kgf/cm² and 0.4 m/min with use of a roller. Thus, the PET base material, the support film composition, and the 6-inch silicon substrate were laminated. Subsequently, the PET base material was peeled off, and thus a support film having a film thickness of 50 µm was formed on the silicon substrate.

Subsequently, the support film was dissolved as described below without peeling the composite layer material made up of the membrane and the support film off from the silicon substrate, that is, the support film was dissolved in a state in which the silicon substrate was being bonded to the composite layer material.

### (Dissolution of support film)

Next, the support film was dissolved by immersing, in p-menthane, the composite layer material which was being bonded to the silicon substrate. It took 120 hours to strip (release) the membrane off from the composite layer material. Moreover, there was no abnormality in state of the membrane after the support film had been dissolved.

### [Comparative Example 4]

A composite layer material was formed on a surface of a 6-inch silicon substrate, under conditions similar to those of Example 1.

Subsequently, the support film was dissolved as described below without peeling the composite layer material made up of the membrane and the support film off from the silicon substrate, that is, the support film was dissolved in a state in which the silicon substrate was being bonded to the composite layer material.

### (Dissolution of support film)

Next, the support film was dissolved by immersing, in water, the composite layer material which was being bonded to the silicon substrate. It took 1 hour to strip (release) the membrane off from the composite layer material. Moreover, there was no abnormality in state of the membrane after the support film had been dissolved.

### [Comparative Example 5]

### (Formation of composite layer material)

In decahydronaphthaline, 10 mass% of the resin C was dissolved, and thus a support film composition was prepared.

Next, the support film composition was applied to a 6-inch silicon substrate with use of a spinner and was then dried at 120°C for 180 seconds. Thus, a support film having a film thickness of 1.5 µm was formed on the silicon substrate.

Next, a membrane composition similar to that of Example 5 was prepared, and the membrane composition was applied to the support film under conditions identical with those in Example 5. Thus, a composite layer material was formed.

Subsequently, the support film was dissolved as described below without peeling the composite layer material made up of the membrane and the support film off from the silicon substrate, that is, the support film was dissolved in a state in which the silicon substrate was being bonded to the composite layer material.

### (Dissolution of support film)

Next, the support film was dissolved by immersing, in p-menthane, the composite layer material which was being bonded to the silicon substrate. It took 5 hours to strip (release) the membrane off from the composite layer material. Moreover, there was no abnormality in state of the membrane after the support film had been dissolved.

### [Comparative Example 6]

A support film composition was prepared in a manner similar to that of Comparative Example 5.

Next, the support film composition was applied to a 6-inch silicon substrate with use of a spinner and was then dried at 120°C for 180 seconds. Thus, a support film having a film thickness of 1.5 µm was formed on the silicon substrate.

Next, a membrane composition similar to that of Example 6 was prepared, and the membrane composition was applied to the support film under conditions identical with those in Example 6. Thus, a composite layer material was formed.

Subsequently, the support film was dissolved as described below without peeling the composite layer material made up of the membrane and the support film off from the silicon substrate, that is, the support film was dissolved in a state in which the silicon substrate was being bonded to the composite layer material.

### (Dissolution of support film)

Next, the support film was dissolved by immersing, in p-menthane, the composite layer material which was being bonded to the silicon substrate. It took 5 hours to strip (release) the membrane off from the composite layer material. Moreover, there was no abnormality in state of the membrane after the support film had been dissolved.

Table 2 below shows conditions for forming the composite layer materials of Comparative Examples 1 through 6 and evaluation results.

**[Table 2]**

| | | | Comparative Example **1** | Comparative Example 2 | Comparative Example 3 | Comparative Example 4 | Comparative Example 5 | Comparative Example 6 |
|---|---|---|---|---|---|---|---|---|
| Membrane | Resin 1 | | Resin A (50 parts) | Resin A (50 parts) | Resin A (50 parts) | Resin A (50 parts) | Resin A (100 parts) | Resin D (100 parts) |
| | Resin 2 | | Resin B (50 parts) | Resin B *(50* parts) | Resin B (50 parts) | Resin B (50 parts) | - | - |
| | Main Solvent | | Chloroform (4900 parts) | Ethyl Lactate (4900 parts) | Ethyl Lactate (4900 parts) | Ethyl Lactate (4900 parts) | PGMEA (1300 parts) | PGMEA (1600 parts) |
| | Additive | | - | - | - | - | Photo-acid-generating Agent A | Photo-acid-generating Agent A |
| | Film Thickness (nm) | | 100 | 100 | 100 | 100 | 100 | 100 |
| | Membrane Formation Conditions | Application Method | Spin Coating | Spin Coating | Spin Coating | Spin Coating | Spin Coating | Spin Coating |
| | | Heating Conditions | 120°C | 120°C | 120°C | 120°C | 90°C | 90°C |
| | | | 5 min | 5 min | 5 min | 5 min | 3 min | 3 min |
| | | Light Exposure Amount (mJ) | - | - | - | - | 100 | 100 |
| | | Heating after Light Exposure | - | - | - | - | 120°C | 120°C |
| | | | | | | | 3 min | 3 min |
| Support Film | Resin | | PHS | PHS | Resin C | Hi-Selon | Resin C | Resin C |
| | Main Solvent | | - | - | - | - | Decahydronaphthaline | Decahydronaphthaline |
| | Film Thickness (nm) | | 1 | 1 | 50 | 50 | 1.5 | 1.5 |
| | Membrane Formation Conditions | Application Method | Spin Coating | Spin Coating | Laminate | Laminate | Spin Coating | Spin Coating |
| | | Application Conditions | | | 3 kgf/cm2 | 3 kgf/cm2 | | |
| | | | | | 0.4 m/min | 0.4 m/min | | |
| | | Heating Conditions | | | 80°C | 80°C | 120°C | 120°C |
| | | | | | | | 3 min | 3 min |
| Substrate | Type of Support | | Silicon Substrate | Silicon Substrate | Silicon Substrate | Silicon Substrate | Silicon Substrate | Silicon Substrate |
| | Existence/Absence of Support while Dissolution | | Exist | Exist | Exist | Exist | Exist | Exist |
| | Stripping Solution | | Ethanol | Ethanol | p-menthane | Water | p-menthane | p-menthane |
| | Stripping Time | | 5 hours | Impossible to Apply | 120 hours | 1 hour | 5 hours | 5 hours |

### (Conclusion)

In Examples 1 through 7 in each of which the support film was dissolved in water or p-menthane after the formed composite layer material was peeled off from the substrate, the membrane could be stripped off from the composite layer material in a shorter time. On the other hand, in Comparative Example 1 and Comparative Examples 3 through 6 in each of which the support film was dissolved in water, p-menthane, or ethanol without peeling the prepared composite layer material off from the substrate, it took a longer time to strip the membrane off from the composite layer material. Moreover, in Comparative Example 2, a membrane could not be formed on the support film formed by use of PHS.

Further, in Examples 1 through 3 in which Hi-Selon was used as the support film, the state of the membrane after the support film had been dissolve was good (i.e., very neat). On the other hand, in Comparative Example 4 in which Hi-Selon was used as the support film as with Examples 1 through 3, slight wrinkles were observed on the membrane after the support film had been dissolved but no abnormality was caused. From the states of the membranes after the support films were dissolved in respective Examples 1 through 3 and Comparative Example 4, it was found that a neater membrane could be obtained by shortening a time taken to strip off the membrane. Moreover, from the evaluation results in Examples 5 and 6 and Comparative Examples 5 and 6, it was confirmed that a time taken for stripping could be shortened and therefore a neater membrane could be formed by forming the membrane with use of the organic compound having an epoxy group and the photo-acid-generating agent A. Moreover, from Example 7, it was confirmed that the composite layer material could be formed which included a membrane other than a membrane containing the organic compound having an epoxy group.

### Industrial Applicability

The present invention can be used in manufacturing a membrane that has an intended function.

### Reference Signs List

1: Membrane (layer other than an outermost layer)
2: Support film (outermost layer)
3: Substrate
10: Composite layer material
21: Membrane
22: Support film
23: Substrate
24: Bath
25: Support
210: Composite layer material
220: Layered body

## Claims

1. A composite layer material (10) comprising at least three layers which are laminated, wherein:
one of the outermost layers of the three or more layers is a support film (2) that
(i) is removable from the other layers, and
(ii) has a self-supporting property,
and at least two layers other than the support film (2) are membranes (1) having a separating function to separate a certain substance from a mixture containing the certain substance,
wherein at least one layer other than the support film (2) is made of
(A) a material which contains at least one selected from the group consisting of (i) an organic compound having an epoxy group and (ii) an organic compound having an amino group,
(B) a material that contains (i) an organic compound having an epoxy group and (ii) a photo-acid-generating agent, or
(C) a material containing metal alkoxide.

2. The composite layer material (10) as set forth in claim 1, wherein a thickness of the support film (2) is 1 µm or more and 100 µm or less.

3. The composite layer material (10) as set forth in claim 1 or 2, wherein the support film (2) is made of a material that is to be dissolved in a liquid.

4. The composite layer material (10) as set forth in claim 3, wherein the liquid is water or an aqueous solution.

5. The composite layer material (10) as set forth in claim 3, wherein the liquid is an organic solvent.

6. The composite layer material (10) as set forth in any one of claims 1 through 5, wherein the membrane (1) has a thickness of 10 nm or more and 1 µm or less.

7. The composite layer material (10) as set forth in any one of claims 1 through 6, wherein:
at least one layer other than the support film (2) is made of a material containing PCGF ((o-cresyl glycidyl ether) -formaldehyde copolymer) and PEI (polyethyleneimine); and
a ratio between the PCGF and the PEI is in a range between 10:90 and 90:10, in terms of weight ratio.

8. A method of manufacturing a membrane (1, 21) for a composite layer material (10) of claim 1, said method comprising the steps of:
(a) forming at least one membrane (1, 21) which is to be a layer different from the outermost layer on a support film (2, 22) which is the outermost layer that has a self-supporting property; and
(b) removing the support film (2, 22) after the step (a), wherein
said at least one membrane formed in the step (a) is a membrane having a separating function to separate a certain substance from a mixture containing the certain substance, wherein said at least one membrane is made of
(A) a material which contains at least one selected from the group consisting of (i) an organic compound having an epoxy group and (ii) an organic compound having an amino group,
(B) a material that contains (i) an organic compound having an epoxy group and (ii) a photo-acid-generating agent, or
(C) a material containing metal alkoxide.

9. The method as set forth in claim 8, wherein a thickness of the support film (2, 22) is 1 µm or more and 100 µm or less.

10. The method as set forth in claim 8 or 9, wherein:
the support film (2, 22) is made of a material that is to be dissolved in a liquid; and
in the step (b), the support film (2, 22) is dissolved with use of the liquid.

11. The method as set forth in claim 10, wherein the liquid is water or an aqueous solution.

12. The method as set forth in claim 10, wherein the liquid is an organic solvent.

13. The method as set forth in any one of claims 8 through 12, each of the at least one membrane (1, 21) formed in the step (a) has a thickness of 10 nm or more and 1 µm or less.

14. The method as set forth in any one of claims 8 through 13, wherein:
at least one membrane (1, 21) formed in the step (a) is made of a material containing PCGF ((o-cresyl glycidyl ether) -formaldehyde copolymer) and PEI (polyethyleneimine); and
a ratio between the PCGF and the PEI is between 10:90 and 90:10, in terms of weight ratio.

15. A method for manufacturing a layered body (220) by laminating a support (25) on an outermost membrane (21) of at least one membrane manufactured with a method recited in any one of claims 8 through 14, said method comprising the step of:
(c) laminating the support (25) on the outermost membrane (21) after the step (a) or (b).

16. The method as set forth in claim 15, wherein:
in the step (c), the support (25) is laminated, while the support film (22) is removed in the step (b), on an outermost membrane that is different from a membrane on which the support film (22) is provided.

## Patentansprüche

1. Verbundschichtmaterial (10), umfassend wenigstens drei Schichten, welche laminiert sind, wobei:
eine der äußersten Schichten der drei oder mehr Schichten ein Träger-film (2) ist, welcher
(i) von den anderen Schichten entfernbar ist, und
(ii) eine selbsttragende Eigenschaft aufweist,
und wenigstens zwei Schichten, welche nicht der Trägerfilm (2) sind, Membranen (1) sind, welche eine Trennfunktion aufweisen, um eine bestimmte Substanz aus einem Gemisch, welches die bestimmte Substanz enthält, zu trennen,
wobei wenigstens eine Schicht, welche nicht der Trägerfilm (2) ist, hergestellt ist, aus:
(A) einem Material, welches wenigstens eines enthält, ausgewählt aus der Gruppe bestehend aus (i) einer organischen Verbindung, welche eine Epoxidgruppe aufweist und (ii) einer organischen Verbindung, welche eine Aminogruppe aufweist,
(B) einem Material, welches (i) eine organische Verbindung, welche eine Epoxidgruppe aufweist und (ii) ein foto-säureerzeugendes Mittel, enthält, oder
(C) einem Material, welches Metallalkoxid enthält.

2. Verbundschichtmaterial (10) nach Anspruch 1, wobei eine Dicke des Trägerfilms (2) 1 µm oder mehr und 100 µm oder weniger beträgt.

3. Verbundschichtmaterial (10) nach Anspruch 1 oder 2, wobei der Trägerfilm (2) aus einem Material hergestellt ist, welches in einer Flüssigkeit gelöst werden soll.

4. Verbundschichtmaterial (10) nach Anspruch 3, wobei die Flüssigkeit Wasser oder eine wässrige Lösung ist.

5. Verbundschichtmaterial (10) nach Anspruch 3, wobei die Flüssigkeit ein organisches Lösungsmittel ist.

6. Verbundschichtmaterial (10) nach einem der Ansprüche 1 bis 5, wobei die Membran (1) eine Dicke von 10 nm oder mehr und 1 µm oder weniger auf-weist.

7. Verbundschichtmaterial (10) nach einem der Ansprüche 1 bis 6, wobei:
wenigstens eine Schicht, welche nicht der Trägerfilm (2) ist, aus einem Material hergestellt ist, welches PCGF ((o-cresyl glycidyl ether) - Formaldehyd-Copolymer) und PEI (Polyethylenimin) enthält; und
ein Verhältnis zwischen dem PCGF und dem PEI in einem Bereich zwischen 10:90 bis 90:10, bezogen auf ein Gewichtsverhältnis, liegt.

8. Verfahren zur Herstellung einer Membran (1, 21) für ein Verbundschicht-material (10) nach Anspruch 1, wobei das Verfahren die Schritte umfasst aus:
(a) Bilden wenigstens einer Membran (1, 21), welche eine Schicht sein soll, welche unterschiedlich von der äußersten Schicht an einem Träger-film (2, 22) ist, welcher die äußerste Schicht ist, welche eine selbsttragende Eigenschaft aufweist; und
(b) Entfernen des Trägerfilms (2, 22) nach dem Schritt (a),
wobei
die wenigstens eine Membran, welche in dem Schritt (a) gebildet wird, eine Membran ist, welche eine Trennfunktion aufweist, um eine bestimmte Substanz aus einem Gemisch zu trennen, welches die bestimmte Substanz enthält, wobei die wenigstens eine Membran hergestellt ist, aus:
(A) einem Material, welches wenigstens eines enthält, ausgewählt aus der Gruppe bestehend aus (i) einer organischen Verbindung, welche eine Epoxidgruppe aufweist, und (ii) einer organischen Verbindung, welche ei-ne Aminogruppe aufweist,
(B) einem Material, welches (i) eine organische Verbindung, welche eine Epoxidgruppe aufweist, und (ii) ein foto-säureerzeugendes Mittel enthält, oder
(C) einem Material, welches Metallalkoxid enthält.

9. Verfahren nach Anspruch 8, wobei eine Dicke des Trägerfilms (2, 22) 1 µm oder mehr und 100 µm oder weniger beträgt.

10. Verfahren nach Anspruch 8 oder 9, wobei:
der Trägerfilm (2, 22) aus einem Material hergestellt ist, welches in einer Flüssigkeit gelöst werden soll; und
in dem Schritt (b), der Trägerfilm (2, 22) unter Verwendung der Flüssigkeit gelöst wird.

11. Verfahren nach Anspruch 10, wobei die Flüssigkeit Wasser oder eine wässrige Lösung ist.

12. Verfahren nach Anspruch 10, wobei die Flüssigkeit ein organisches Lösungsmittel ist.

13. Verfahren nach einem der Ansprüche 8 bis 12, wobei jede der wenigstens einen Membran (1, 21), welche in dem Schritt (a) gebildet wird, eine Dicke von 10 nm oder mehr und 1 µm oder weniger aufweist.

14. Verfahren nach einem der Ansprüche 8 bis 13, wobei:
wenigstens eine Membran (1, 21), welche in dem Schritt (a) gebildet wird, aus einem Material hergestellt ist, welches PCGF ((o-cresyl glycidyl ether) - Formaldehyd-Copolymer) und PEI (Polyethylenimin) enthält; und
ein Verhältnis zwischen dem PCGF und dem PEI zwischen 10:90 und 90:10, bezogen auf das Gewichtsverhältnis, liegt.

15. Verfahren zur Herstellung eines geschichteten Körpers (220) durch Lami-nieren eines Trägers (25) auf eine äußerste Membran (21) von wenigstens einer Membran, welche mit einem Verfahren nach einem der Ansprüche 8 bis 14 hergestellt worden ist, wobei das Verfahren den Schritt umfasst, aus:
(c) Laminieren des Trägers (25) auf die äußerste Membran (21) nach dem Schritt (a) oder (b).

16. Verfahren nach Anspruch 15, wobei:
in dem Schritt (c), der Träger (25), während der Trägerfilm (22) in dem Schritt (b) entfernt wird, auf eine äußersten Membran laminiert wird, welche sich von einer Membran unterscheidet, an welcher der Trägerfilm (22) bereitgestellt ist.

## Revendications

1. Matériau composite en couches (10) comprenant au moins trois couches qui sont stratifiées, dans lequel :
l'une des couches les plus externes des trois couches ou plus est un film de support (2) qui
(i) peut être retiré des autres couches, et
(ii) possède une propriété d'autoportance,
et au moins deux couches autres que le film support (2) sont des membranes (1) ayant une fonction de séparation pour séparer une certaine substance à partir d'un mélange contenant la certaine substance,
dans lequel au moins une couche autre que le film de support (2) est faite de
(A) un matériau qui contient au moins l'un sélectionné dans le groupe constitué (i) d'un composé organique ayant un groupe époxy et (ii) d'un composé organique ayant un groupe amino,
(B) un matériau qui contient (i) un composé organique ayant un groupe époxy et (ii) un agent photo-générateur d'acide, ou
(C) un matériau contenant un alcoxyde métallique.

2. Matériau composite en couches (10) selon la revendication 1, dans lequel une épaisseur du film de support (2) est de 1 µm ou plus et de 100 µm ou moins.

3. Matériau composite en couches (10) selon la revendication 1 ou 2, dans lequel le film de support (2) est fait d'un matériau qui doit être dissous dans un liquide.

4. Matériau composite en couches (10) selon la revendication 3, dans lequel le liquide est de l'eau ou une solution aqueuse.

5. Matériau composite en couches (10) selon la revendication 3, dans lequel le liquide est un solvant organique.

6. Matériau composite en couches (10) selon l'une quelconque des revendications 1 à 5, dans lequel la membrane (1) présente une épaisseur de 10 nm ou plus et de 1 µm ou moins.

7. Matériau composite en couches (10) selon l'une quelconque des revendications 1 à 6, dans lequel :
au moins une couche autre que le film de support (2) est faite d'un matériau contenant un PCGF (copolymère de (o-crésylglycidyléther)-formaldéhyde) et une PEI (polyéthylèneimine) ; et
un rapport entre le PCGF et la PEI est dans une plage entre 10:90 et 90:10, en termes de rapport pondéral.

8. Procédé de fabrication d'une membrane (1, 21) pour un matériau composite en couches (10) selon la revendication 1, ledit procédé comprenant les étapes suivantes :
(a) la formation d'au moins une membrane (1, 21) qui doit être une couche différente de la couche la plus externe sur un film de support (2, 22) qui est la couche la plus externe qui présente une propriété d'autoportance ; et
(b) le retrait du film de support (2, 22) après l'étape (a), dans lequel
ladite au moins une membrane formée dans l'étape (a) est une membrane ayant une fonction de séparation pour séparer une certaine substance à partir d'un mélange contenant la certaine substance, dans lequel ladite au moins une membrane est faite de
(A) un matériau qui contient au moins l'un sélectionné dans le groupe constitué (i) d'un composé organique ayant un groupe époxy et (ii) d'un composé organique ayant un groupe amino,
(B) un matériau qui contient (i) un composé organique ayant un groupe époxy et (ii) un agent photo-générateur d'acide, ou
(C) un matériau contenant un alcoxyde métallique.

9. Procédé selon la revendication 8, dans lequel une épaisseur du film de support (2, 22) est de 1 µm ou plus et de 100 µm ou moins.

10. Procédé selon la revendication 8 ou 9, dans lequel :
le film de support (2, 22) est fait d'un matériau qui doit être dissous dans un liquide ; et
dans l'étape (b), le film de support (2, 22) est dissous à l'aide du liquide.

11. Procédé selon la revendication 10, dans lequel le liquide est de l'eau ou une solution aqueuse.

12. Procédé selon la revendication 10, dans lequel le liquide est un solvant organique.

13. Procédé selon l'une quelconque des revendications 8 à 12, chacune parmi l'au moins une membrane (1, 21) formée dans l'étape (a) présente une épaisseur de 10 nm ou plus et de 1 µm ou moins.

14. Procédé selon l'une quelconque des revendications 8 à 13, dans lequel :
au moins une membrane (1, 21) formée dans l'étape (a) est faite d'un matériau contenant un PCGF (copolymère de (o-crésylglycidyléther)-formaldéhyde) et une PEI (polyéthylèneimine) ; et
un rapport entre le PCGF et la PEI est entre 10:90 et 90:10, en termes de rapport pondéral.

15. Procédé de fabrication d'un corps stratifié (220) par stratification d'un support (25) sur une membrane (21) la plus externe d'au moins une membrane fabriquée selon un procédé selon l'une quelconque des revendications 8 à 14, ledit procédé comprenant l'étape suivante :
(c) la stratification du support (25) sur la membrane (21) la plus externe après l'étape (a) ou (b).

16. Procédé selon la revendication 15, dans lequel :
dans l'étape (c), le support (25) est stratifié, tandis que le film de support (22) est retiré dans l'étape (b), sur une membrane la plus externe qui est différente d'une membrane sur laquelle le film de support (22) est fourni.
